# EUROPÄISCHE PATENTSCHRIFT

(11) **EP 1 385 719 B1**
(45) Veröffentlichungstag und Bekanntmachung des Hinweises auf die Patenterteilung: **29.06.2005**
(21) Anmeldenummer: 02732590.1
(22) Anmeldetag: 10.04.2002
(51) Int. Cl.: B60R 21/01

(54) **VERFAHREN ZUM ANSTEUERN EINES REVERSIBLEN INSASSENSCHUTZMITTELS IN EINEM KRAFTFAHRZEUG**
METHOD FOR ACTUATING A REVERSIBLE PASSENGER PROTECTION SYSTEM IN A MOTOR VEHICLE
PROCEDE POUR ACTIONNER UN MOYEN DE PROTECTION REVERSIBLE DE PASSAGER DANS UN VEHICULE AUTOMOBILE

(30) Priorität: 02.05.2001 DE 10121386
(43) Veröffentlichungstag der Anmeldung: 04.02.2004
(73) Patentinhaber: DaimlerChrysler AG, 70567 Stuttgart (DE)
(72) Erfinder: EBERLE, Walter, 73269 Hochdorf (DE); HINRICHS, Wolfgang, 70794 Filderstadt (DE); JUSTEN, Rainer, 71155 Altdorf (DE); MAMMEL, Bernd, 71083 Herrenberg (DE); RÖHM, Hans, 72218 Wildberg-Sulz (DE); VILLINO, Guido, 71229 Leonberg (DE); WOLDRICH, Markus, 71254 Ditzingen (DE)
(86) Internationale Anmeldenummer: PCT/EP2002/003980
(87) Internationale Veröffentlichungsnummer: WO 2002/087926

(56) Entgegenhaltungen:
- DE-A- 4 200 061
- DE-A- 10 005 010
- DE-A- 10 029 061
- DE-A- 19 708 508
- DE-A- 19 811 865
- DE-A- 19 961 799

## Beschreibung

Die Erfindung betrifft ein Verfahren zum Ansteuern eines reversiblen Insassenschutzmittels in einem Kraftfahrzeug gemäß dem Oberbegriff des Patentanspruchs 1. Ein solches Verfahren ist aus dem Dokument DE 19811865A bekannt.
In heutigen Kraftfahrzeugen werden ansteuerbare Rückhaltemittel wie Sicherheitsgurt und Airbag eingesetzt, um die Unfallfolgen für einen Fahrzeuginsassen zu mildern. Verfahren zum Ansteuern dieser Rückhaltemittel in einem Kraftfahrzeug sind aus der Praxis und aus vielen Druckschriften bekannt.

Neben den gängigen Rückhaltemitteln wie Airbag und Sicherheitsgurt mit Gurtstraffer gibt es eine Reihe weiterer ansteuerbarer Insassenschutzmittel, welche eine Rückhaltewirkung und/oder eine energieabsorbierende Wirkung zum Schutze eines Insassen bei einer Kollision entfalten. Beispiele für solche Insassenschutzmittel sind verfahrbare Prallkörper, Kissen und Kopfstützen, welche mittels einer Ansteuerung in Größe, Härte, Form und Lage verändert werden können. Neben diesen Insassenschutzmitteln können zur Verminderung der Unfallschwere weitere ansteuerbare Schutzmittel vorgesehen werden, welche die Unfallfolgen für einen Fahrzeuginsassen vermindern, indem der Insasse positioniert wird, das heißt, er wird in eine für einen Unfall günstige Stellung gebracht. Mittel zum Positionieren des Insassen sind beispielsweise eine elektrische Sitzverstellung, eine Kopfstützenverstellung, Sicherheitsgurtstraffer und verfahrbare Polster.

In Kraftfahrzeugen können zur Milderung von Unfallfolgen auch ansteuerbare Schutzmittel vorgesehen werden, welche auch dem Schutz von Kollisionspartnern, insbesondere dem Schutz von Fußgängern und Radfahrern dienen. Beispiele hierfür sind verstellbare Motorhauben, verfahrbare Stoßfänger und härteverstellbare Prallelemente an der Fahrzeugaußenhaut. Weitere ansteuerbare Schutzmittel sind die Niveauregulierung und das Brems- und Lenksystem mittels denen ein Aufprall in Richtung geringerer Verletzungsschwere der Insassen und/oder der Kollisionspartner optimiert werden kann. Diese Mittel sind im Folgenden nicht als Insassenschutzmittel im Sinne der vorliegenden Erfindung zu verstehen.

Bei der Ansteuerung von Schutzmitteln zur Verminderung der Unfallfolgen im Straßenverkehr kann unterschieden werden zwischen vorbeugenden Maßnahmen, welche vor einem Unfall ergriffen werden, und akuten Maßnahmen, welche nach einem erkannten Unfall ergriffen werden. Die Erfindung bezieht sich auf eine Ansteuerung von Schutzmitteln als vorbeugende Maßnahme.

Aus der DE 19524358 C1 ist es bekannt bei abrupten Vollbremsungen und unter Berücksichtigung der Fahrzeuggeschwindigkeit die Warnblinkanlage, eine Aufprallschutzvorrichtung und einen Gurtstraffer anzusteuern. Es ist erwähnt während einer Panikbremsung präventiv wirkende Sicherheitsvorrichtungen auszulösen. Es wird beispielsweise während einer erkannten Panikbremsung der Sicherheitsgurt präventiv angestrafft.

In der US 4258931 ist ein reversibles Schutzsystem in Gestalt eines Luftsacks für ein Kraftfahrzeug beschrieben, welches im Vorfeld einer Kollision in Abhängigkeit des Bremsdrucks angesteuert wird. Hierzu ist im Hydraulikkreislauf des Bremssystems ein Drucksensor vorgesehen, welcher den Hydraulikdruck erfasst, und mittels dem auf eine Notfallsituation geschlossen wird. Im Falle einer Notfallsituation wird ein Ventil angesteuert, um die Befüllung des Luftsacks zu bewirken. Führt die Notfallsituation nicht zu einem Unfall, so entlüftet der Fahrer den Airbag manuell mit Hilfe eines Schalters. Findet ein Unfall statt, ohne dass im Vorfeld des Unfalls eine Notfallsituation erkannt wurde, so wird der Luftsack mittels unfallerkennenden Sensoren ausgelöst.

Aus EP 1122136 A (Art. 54(3) EPÜ) ist ein Verfahren zur Ansteuerung eines reversiblen Insassenschutzsystems in einem Kraftfahrzeug bekannt, wobei mit einer Sensorik Fahrzustandsdaten erfasst werden. Die Fahrzustandsdaten werden hinsichtlich eines Zustands Notbremsung überwacht und bei ermitteltem Zustand Notbremsung wird das Insassenschutzsystem vor dem Kollisionszeitpunkt ausgelöst und in Wirkstellung gebracht. Zusätzlich ist aus dieser gattungsbildenden Schrift bekannt eine kritische Fahrsituation aus den Fahrzustandsdaten Lenkwinkel, Raddrehzahl, Gierrate und Beschleunigung zu ermitteln.

Aus der DE 19708508, welche ein Verfahren zur Erfassung von Fahrzustandsdaten betrifft, ist es bekannt, den Zustand Übersteuern mittels einer Bewertung des Schwimmwinkels zu ermitteln.

Weiterhin ist aus der DE 4200061 A1, welche sich ebenfalls mit der Bestimmung von Fahrzustandsdaten befasst, bekannt, den Schwimmwinkel aus den Raddrehzahlen, der Giergeschwindigkeit und der Querbeschleunigung zu ermitteln.

Aufgabe der Erfindung ist es, die Unfallfolgen im Straßenverkehr zu vermindern. Diese Aufgabe wird erfindungsgemäß durch die Merkmale des Anspruchs 1 gelöst.

Vorteil des erfindungsgemäßen Verfahrens ist, dass mittels der Nutzung bereits im Fahrzeug vorhandener Sensorik und ohne Hinzuziehen von Umgebungsdaten ein großer Teil der Unfallsituationen bereits vor der Kollision erkannt wird und darauf basierend mittels einer Ansteuerung reversibler Schutzsysteme die Insassensicherheit wesentlich erhöht wird.

Die Sensorik zur Erfassung von Fahrzustandsdaten umfasst beispielsweise einen Lenkwinkelsensor, einen Pedalwegsensor, einen Bremsdrucksensor, Raddrehzahlsensoren, Beschleunigungssensoren und einen Gierratensensor. Der Lenkwinkelsensor erfasst den Lenkwinkel am Lenkrad, wobei dieser Lenkwinkel, ebenso wie der Pedalweg eine Sollgröße des Fahrbetriebs darstellt. Dagegen sind beispielsweise die erfassten Beschleunigungen, die Gierrate und die Raddrehzahlen Istgrößen des Fahrbetriebs. Ein reversibles Insassenschutzmittel ist ein Mittel, dessen Zweck es ist, die Belastung eines Kraftfahrzeuginsassen im Falle einer Kollision zu vermindern, wobei das Schutzmittel mehrmals vom Ausgangszustand in einen Wirkzustand gebracht, und aus dem Wirkzustand wieder in seinen Ausgangszustand zurückversetzt werden kann.

Eine Notbremsung liegt vor, falls ein Bremsvorgang mit mindestens einem Merkmal erfolgt, welches auf eine Gefahren- oder Notsituation hindeutet. Dies ist der Fall, wenn dieses Merkmal (diese Merkmale) signifikant außerhalb eines vorgebbaren Wertebereichs liegt (liegen). Der Zustand Notbremsung wird ermittelt, indem mindestens einer der Parameter Bremsdruck, Geschwindigkeit der Bremspedalbetätigung und Geschwindigkeit der Rücknahme des Gaspedals zur Bewertung des Bremsvorgangs herangezogen wird.

Alternativ zu einer Notbremsung, welche vom Fahrer bewirkt wird, kann eine Notbremsung basierend auf einer Umgebungserfassung automatisiert erfolgen. Ein Signal, welches auf eine automatisierte Notbremsung hinweist, beispielsweise das Steuersignal für das Auslösen der Notbremsung, kann ebenfalls zur Durchführung des erfindungsgemäßen Verfahrens herangezogen werden.

Der Zustand Untersteuern des Fahrzeugs bedeutet, dass der Radius der durch den Lenkwinkel vorgegebenen Sollbahn des Fahrzeugs kleiner als der Radius der tatsächlich durchfahrenen Bahn des Fahrzeugs ist. Dagegen bedeutet ein Übersteuern des Fahrzeugs, dass der Radius der durch den Lenkwinkel vorgegebenen Sollbahn größer als der Radius der tatsächlich durchfahrenen Bahn ist. Unter der durch den Lenkwinkel vorgegebenen Sollbahn ist die Trajektorie des Fahrzeugs zu verstehen, welche entsteht wenn das Fahrzeug mit dem zu betrachtenden Lenkwinkel und mit so kleiner Geschwindigkeit fährt, dass die Querkräfte gegenüber den Längskräften vernachlässigt werden können. Um die Zustände Untersteuern und Übersteuern zu ermitteln, werden die Fahrzustandsdaten herangezogen.

Von der Datenverarbeitungseinrichtung wird fortlaufend überprüft, ob einer der Zustände Notbremsung, Übersteuern oder Untersteuern vorliegt. Ist dies der Fall, so wird das reversible Insassenschutzsystem angesteuert, wobei in Abhängigkeit der Zustände Notbremsung, Übersteuern und Untersteuern die Auslösegeschwindigkeit, die Stellgeschwindigkeit, die Härte und die Wirkrichtung angepasst werden kann. Insbesondere wird die Ansteuerung der Insassenschutzmittel bei gleichzeitigem Vorliegen von mehr als einem der Zustände Notbremsung, Untersteuern und Übersteuern auf eine kombinierte Gefährdung angepasst, wofür ein zusätzlicher Bewertungsalgorithmus vorgesehen werden kann.

Zusätzlich wird mittels den Zuständen Notbremsung, Übersteuern und Untersteuern die Richtung ermittelt, aus welcher eine maximale Gefährdung zu erwarten ist. Das Insassenschutzsystem wird entsprechend der ermittelten Gefährdungsrichtung derart angesteuert, dass die Schutzwirkung entsprechend der Richtung maximaler Gefährdung erfolgt. Durch die kombinierte Betrachtung der Zustände Notbremsung, Übersteuern und Untersteuern ist es möglich, bei Vorliegen von mehr als einem, auf eine Gefährdung hinweisenden Zustand das Schutzsystem in der Weise anzusteuern, dass die Insassenbelastung bei einem Unfall möglichst gering ist.

In einer Weiterbildung des Verfahrens wird das reversible Insassenschutzsystem nur angesteuert, falls das Fahrzeug eine Mindestgeschwindigkeit aufweist. Dies hat den Vorteil, dass eine Ansteuerung der Insassenschutzsysteme bei geringen Geschwindigkeiten verhindert werden kann. Es kann erwünscht sein, unterhalb einer vorgebbaren Geschwindigkeit die Insassenschutzsysteme nicht anzusteuern, da bei einer geringen Geschwindigkeit eine Gefährdung der Insassen, welche mittels den Fahrzustandsdaten erkannt werden kann, vernachlässigbar klein ist.

In einer vorteilhaften Ausgestaltung des Verfahrens wird der Zustand Notbremsung anhand eines Eingriffs in die Fahrdynamik erkannt, welche von einem Bremsassistenzsystem vorgenommen wird. Dieses Bremsassistenzsystem bewertet seinerseits Fahrzustandsgrößen um in Abhängigkeit des Bewertungsergebnisses den Eingriff in die Fahrdynamik vorzunehmen. Der Eingriff des Bremsassistenzsystems in die Fahrdynamik erfolgt durch Senden von Steuersignalen an die Stelleinrichtungen, welche die Fahrdynamik beeinflussen. Diese Steuersignale des Bremsassistenzsystems kann zur Erkennung der Notbremsung herangezogen werden. Alternativ zu den Steuersignalen kann ein anderes Informationssignal, welches vom Bremsassistenzsystem auf einen Datenbus gesandt wird zur Erkennung des Zustands Notbremsung herangezogen werden. Vorteil dieser Ausgestaltung des Verfahrens ist es, dass eine Notbremsung mit besonders geringem Aufwand erkannt wird. Dagegen muss in Kauf genommen werden, dass eine Auslösung der Schutzsysteme an den Algorithmus des Bremsassistenzsystems gekoppelt ist.

In einer weiteren Ausgestaltung des Verfahrens wird das Steuersignal des Bremslichtschalters zur Plausibilisierung der Notbremsung herangezogen. Dieses Signal wird häufig auf einem Datenbus im Fahrzeug bereitgestellt, so dass kein zusätzlicher Verkabelungsaufwand entsteht. Vorteil der mittels dieser Weiterbildung des Verfahrens erreichten Redundanz bei der Erkennung einer Notbremsung ist, dass die Entscheidungssicherheit bei einer Ansteuerung eines reversiblen Schutzsystems erhöht wird.

In einer Ausgestaltung des Verfahrens werden die Zustände Untersteuern und Übersteuern ermittelt, indem die Differenz aus einem Winkel, welcher eine tatsächliche Veränderung der Fahrtrichtung beschreibt, und dem Lenkwinkel bewertet wird. Diese Bewertung kann in einer einfachen Schwellwertabfrage bestehen, wobei der Schwellwert fest vorgebbar ist, oder es kann der Schwellwert als eine Funktion anderer Parameter, beispielsweise den Straßeneigenschaften oder der Fahrzeugbeladung angepasst werden. Die Zustände Übersteuern und Untersteuern können auch unter Heranziehen zeitlich zurückliegender Werte des fahrtbeschreibenden Winkels und des Lenkwinkels ermittelt werden. Mittels den zurückliegenden Werten der ermittelten Winkel kann die Differenz aus beiden Winkeln als Funktion der Zeit dargestellt und einer Bewertung unterzogen werden. Beispielsweise kann die berechnete Winkeldifferenz über einen vorgebbaren Zeitraum integriert werden, oder es wird die Steigung der Winkeldifferenz bewertet.

Der Winkel, welcher eine Veränderung der tatsächlichen Fahrtrichtung beschreibt kann aus unterschiedlichen Parametersätzen ermittelt werden. Dies kann dazu genutzt werden die Ermittlung eines Zustandes, der zur Auslösung eines Schutzsystems führt zu plausibilisieren. Die mittels einer redundanten Ermittlung eines Auslösezustands erreichte Sicherheit ermöglicht das Ansteuern des Schutzsystems bei niedrigeren Auslöseschwellen und somit zu einem früheren Zeitpunkt. Als Parametersätze zur Ermittlung des Zustandes Untersteuern können beispielsweise die Raddrehzahlen, die Querbeschleunigung und der Radstand, oder in einem anderen Beispiel die Raddrehzahlen, die Giergeschwindigkeit und der Radstand herangezogen werden. Beide Parametersätze sind vorteilhafterweise in modernen Fahrzeugen auf einem Datenbussystem verfügbar. Anstelle der Raddrehzahlen kann auch direkt die Fahrzeuggeschwindigkeit verwendet werden, wobei diese aus den Raddrehzahlen ermittelt werden kann.

Zur Ermittlung des Zustands Übersteuern hat es sich gezeigt, dass der Schwimmwinkel eine hierfür gut geeignete Größe ist, welche ein Übersteuern unmittelbar kennzeichnet. Der Schwimmwinkel kann aus dem verfügbaren Parametersatz Giergeschwindigkeit, Querbeschleunigung und einem der Parameter Raddrehzahlen oder Fahrzeuggeschwindigkeit ermittelt werden, wobei die Fahrzeuggeschwindigkeit wiederum aus den Raddrehzahlen ermittelt werden kann.

Zur zusätzlichen Absicherung des Zustands Übersteuern wird eine Sollgiergeschwindigkeit ermittelt, welche aus der Fahrzeuggeschwindigkeit und dem Lenkwinkel berechnet wird. Falls die Differenz aus Sollgiergeschwindigkeit und Giergeschwindigkeit eine vorgebbare Schwelle übersteigt, wird ebenfalls auf den Zustand Übersteuern geschlossen.

In einer vorteilhaften Ausgestaltung des Verfahrens umfasst das Schutzsystem eine elektrische Sitzverstellvorrichtung und/oder eine elektrische Verstellvorrichtung von Fahrzeugöffnungen und/oder einen reversibler Gurtstraffer und/oder eine elektrisch verstellbare Prallschutzvorrichtung. Eine elektrische Sitzverstellvorrichtung und elektrische Verstellvorrichtungen von Fahrzeugöffnungen, wie beispielsweise das elektrisch verstellbare Schiebedach und elektrisch verstellbare Fensterheber sind in heutigen Fahrzeugen zumindest teilweise vorhanden und können mit geringem Aufwand zusätzlich zur Vorkonditionierung der Fahrzeuginsassen oder des Fahrzeugs genutzt werden. Alle elektrisch verstellbaren Schutzsysteme haben den Vorteil, dass sich die Energieversorgung über das Bordnetz einfach gestaltet, insbesondere elektromotorische Antriebe ermöglichen auf einfache Weise die Reversibilität der Schutzsysteme. Hierdurch ist es möglich die Schutzsysteme, unter Berücksichtigung ihrer Wirkung auf Fahrer und Insassen, auch dann auszulösen, wenn eine Gefahrensituation ermittelt wird, welche nicht mit hoher Sicherheit, sondern lediglich mit einer gewissen, vorgebbaren Wahrscheinlichkeit zu einer Kollision führt. Eine solche Gefahrensituation zu erkennen leistet das erfindungsgemäße Verfahren, wobei als Vorteil genannt werden soll, dass das Verfahren in einer einfachen Ausführungsform, bereits in heutigen Fahrzeugen ohne zusätzliche Sensorik und ohne zusätzliche Aktuatorik durchgeführt werden kann.

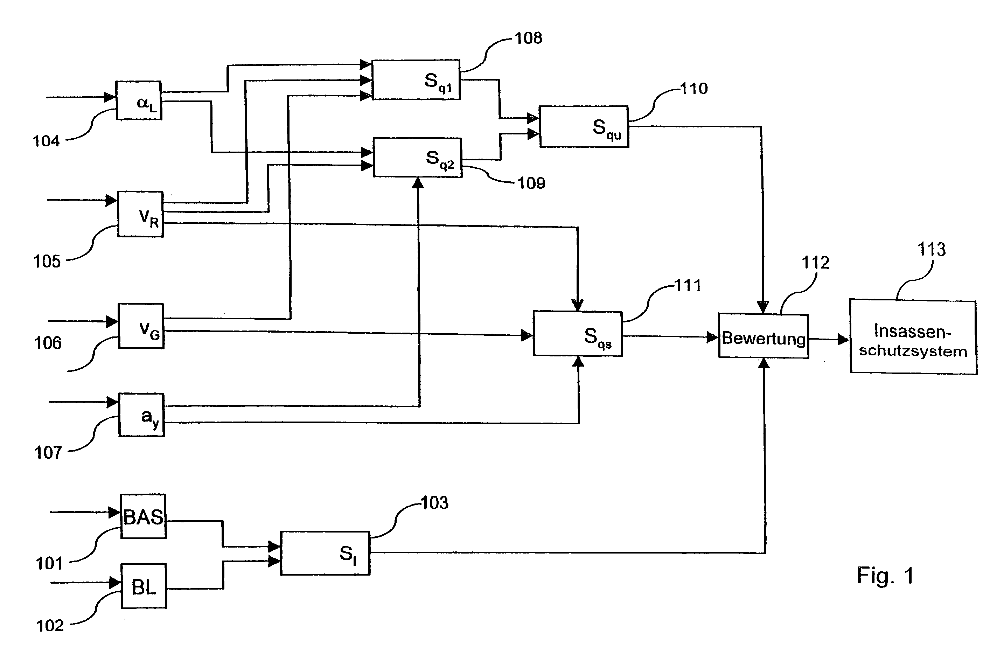

Nachfolgend wird eine vorteilhafte Ausführungsform des erfindungsgemäßen Verfahrens zum Ansteuern eines reversiblen Insassenschutzmittels in einem Kraftfahrzeug anhand der Zeichnung näher beschrieben:
Die einzige Figur zeigt ein Blockschaltbild einer Vorrichtung zur Ausführung einer vorteilhaften Ausführungsform des erfindungsgemäßen Verfahrens.

Zur Ansteuerung eines reversiblen Insassenschutzsystems, werden die Zustände Notbremsung, Untersteuern und Übersteuern überwacht.

Hierzu werden von der Datenverarbeitungseinrichtung, als Eingangsdaten das Steuersignal eines Bremsassistenzsystems BAS und das Steuersignal eines Bremslichtschalters BL herangezogen, und in den Blöcken 101 und 102 daraufhin überprüft, ob sie aktiv sind. Sind beide Signale aktiv, so kann, insbesondere aufgrund der Redundanz, welche mittels der Hinzuziehung des Bremslichtschaltersignals erreicht wird, auf eine Notbremsung geschlossen werden. Das Vorliegen einer Notbremsung führt dazu, dass das Signal Längsschutz Sₗ in Block 103 aktiv gesetzt wird. In den Blöcken 104 bis 107 werden der Lenkwinkel α_{L}, die Raddrehzahlen der vier Räder v_{R}, die Giergeschwindigkeit v_{G} und die Querbeschleunigung a_{y}, welche auf einem Datenbus bereitgestellt werden, von der Datenverarbeitungseinrichtung erfasst. Die Giergeschwindigkeit v_{G} ist die einfache zeitliche Ableitung des Gierwinkels, weshalb sie häufig auch als Gierwinkelgeschwindigkeit bezeichnet wird. Aus den Raddrehzahlen v_{R} wird in Block 105 die Fahrzeuggeschwindigkeit v_{F} ermittelt. In einer alternativen Ausführungsform des Verfahrens kann in Block 105 anstelle der Raddrehzahlen v_{R} die Fahrzeuggeschwindigkeit v_{F} erfasst und zur Durchführung des Verfahrens bereitgestellt werden. Falls die Eingangsinformationen der Blöcke 101, 102 und 104 bis 107 nicht über einen Datenbus übermittelt werden, können sie auch über Signalleitungen erfasst werden.

In den Blöcken 108 und 109 wird auf eine Gefahrensituation durch Untersteuern geschlossen: In Block 108 wird aus der Fahrzeuggeschwindigkeit v_{F} und der Giergeschwindigkeit v_{G} ein virtueller Solllenkwinkel berechnet, welcher bei fehlender Zentripedalkraft dazu führen würde, dass sich das Fahrzeug auf einer Bahn mit dem gewünschten Kurvenradius bewegt. Zu dieser Berechnung wird ebenso wie in Block 109 als unveränderliche Größe der Radstand 1 des Fahrzeugs hinzugezogen. Ein solcher virtueller Solllenkwinkel ist der Ackermannwinkel (s. Dubbel, Taschenbuch für den Maschinenbau, 20. Auflage, Q27), welcher in Block 108 vom Lenkwinkel α_{L} abgezogen wird. Ist der Betrag der Differenz zwischen dem virtuellen Solllenkwinkel und dem Lenkwinkel α_{L} größer als ein vorgebbarer Wert, so wird das Signal Querschutzl S_{ql} aktiv gesetzt. Der Ackermannwinkel α_{A} ergibt sich aus den angegebenen Größen in Block 108 wie folgt: α_{A} = (l/v)v_{G}. Parallel zur Überwachung einer Untersteuerung in Block 108 wird in Block 109 ebenfalls auf einen Zustand Untersteuern geschlossen, wobei hierzu ein anderer Parametersatz herangezogen wird. Der Ackermannwinkel wird aus der Fahrzeuggeschwindigkeit v_{F} und der Querbeschleunigung ay berechnet, und ebenfalls vom Lenkwinkel α_{L} abgezogen. Ist der Betrag der Differenz dieser beiden Winkel größer als ein vorgebbarer Wert, so wird das Signal Querschutz2 S_{q2} aktiv gesetzt. Die Berechnung des Ackermannwinkels in Block 109 mittels dem angegebenen Parametersatz ergibt sich als: α_{A} = (1/v²) a_{y}.

In Block 110 werden die Signale Querschutzl S_{q1} und Querschutz2 S_{q2} erfasst und es wird das Signal Querschutz-Untersteuern S_{qu} aktiviert, falls die beiden Signale Querschutzl S_{q1} und Querschutz2 S_{q2} aktiv sind. Die Überwachung des Zustands Untersteuern mittels zweier getrennter Algorithmen in den Blöcken 108 und 109, und die gegenseitige Absicherung der Ergebnisse erhöht die Erkennungssicherheit. Dies ermöglicht zudem, die Schwellen für die Aktivierung der Signale Querschutzl S_{q1} und Querschutz2 S_{q2} niedriger zu wählen, als dies in einer vereinfachten Ausführungsform bei der Berücksichtigung von nur einem der beiden verwendeten Parametersätze möglich wäre.

Aus den Parametern Querbeschleunigung a_{y}, Giergeschwindigkeit v_{G} und Raddrehzahlen v_{R} wird in Block 111 ein Zustand Übersteuern überwacht. Hierzu wird der Schwimmwinkel berechnet, und falls dieser einen vorgebbaren Wert übersteigt, wird das Signal Querschutz-Schleudern S_{qs} aktiviert.

In Block 112 werden die Signale Längsschutz Sₗ, Querschutz-Untersteuern S_{qu} und Querschutz-Schleudern S_{qs} erfasst und bewertet. Falls eines der Signale aktiv ist, wird das entsprechende Schutzsystem in Block 113 angesteuert. Sind mehr als eines der Signale aktiv, so wird das Schutzsystem entsprechend der Bewertung in Block 112 angesteuert. Ist beispielsweise nur das Signal Längsschutz Sₗ aktiv, so wird eine Kollision mit Impulsübertrag in Fahrtrichtung erwartet und die Insassen werden so vorkonditioniert, dass sie hierbei möglichst gering belastet werden, indem die Sitze nach hinten verschoben werden und ein reversibler Gurtstraffer angesteuert wird. Sind in einem anderen Beispiel die Signale Längsschutz Sₗ und Querschutz-Übersteuern S_{qs} aktiv, wird auf eine primäre Gefährdung von einer Seite geschlossen und es wird anstelle der Längsverschiebung der Sitze, derjenige Sitz, welcher der Gefahrenseite zugewandt ist, zur anderen Seite hin verschoben, oder es werden in einem anderen Beispiel alle Sitze zur Mitte hin verschoben.

In einer alternativen Ausführungsform kann in Block 110 das Signal Querschutz-Untersteuern S_{qu} aktiv gesetzt werden, falls mindestens eines der beiden Signale Querschutzl S_{q1} und Querschutz2 S_{q2} aktiv sind. Hierdurch geht die Redundanz aus der weiter oben angegebenen Ausführungsform verloren. Diese Ausführungsform ist vorzuziehen, falls das angesteuerte Schutzmittel nicht oder nur in geringem Maße vom Fahrer oder den Insassen wahrgenommen wird, und somit nur eine vernachlässigbare Beeinträchtigung erzeugt. In diesem Fall kann auf eine Absicherung des Auslösezustands zugunsten einer häufigeren Auslösung verzichtet werden. In diesem Fall könnte auch nur eines der beiden Kriterien in den Blöcken 108 und 109 geprüft werden.

In einer anderen alternativen Ausführungsform wird in Block 111 zusätzlich der Lenkwinkel α_{L} erfasst. Aus dem Lenkwinkel α_{L} und den Raddrehzahlen v_{R} wird eine Sollgiergeschwindigkeit ermitteln. Übersteigt die Differenz aus der Sollgiergeschwindigkeit und der Giergeschwindigkeit einen vorgebbaren Wert, wird ebenfalls das Signal Querschutz-Schleudern S_{qs} aktiviert.

## Patentansprüche

1. Verfahren zum Ansteuern eines reversiblen Insassenschutzmittels (113) in einem Kraftfahrzeug mit einer Sensorik, welche Fahrzustandsdaten erfasst und einem reversiblen Insassenschutzmittel (113), welches vor dem Kollisionszeitpunkt ausgelöst und **dadurch** in Wirkstellung gebracht werden kann, wobei die Fahrzustandsdaten hinsichtlich eines Zustands Notbremsung (103) überwacht werden, und bei ermitteltem Zustand Notbremsung (103) das Insassenschutzsystem (113) ausgelöst wird, wobei die Fahrzustandsdaten zusätzlich hinsichtlich eines Zustands Übersteuern (111) und eines Zustands Untersteuern (110) überwacht werden, und bei ermitteltem Zustand Notbremsung (103) und/oder Übersteuern (111) und/oder Untersteuern (110) das Insassenschutzsystem (113) ausgelöst wird,
**dadurch gekennzeichnet , dass**
mittels der Zustände Notbremsung (103), Untersteuern (110) und Übersteuern (111) die Richtung ermittelt wird, aus welcher eine maximale Gefährdung zu erwarten ist, und das Insassenschutzsystem (113) derart angesteuert wird, dass die Schutzwirkung entsprechend der Richtung maximaler Gefährdung erfolgt.

2. Verfahren nach Anspruch 1, **dadurch gekennzeichnet, dass** die Geschwindigkeit des Kraftfahrzeugs ermittelt wird und die reversible Insassenschutzeinrichtung nur dann ausgelöst wird, wenn zusätzlich das Fahrzeug eine Mindestgeschwindigkeit aufweist.

3. Verfahren nach einem der Ansprüche 1 oder 2, **dadurch gekennzeichnet, dass** das Fahrzeug ein Bremsassistenzsystem aufweist, welches in vorgegebenen kritischen Situationen mittels eines Steuersignals einen Eingriff in das Bremssystem bewirkt, und dass zur Ermittlung des Zustands Notbremsung (103) das Steuersignal des Bremsassistenzsystems (101) herangezogen wird.

4. Verfahren nach Anspruch 3, **dadurch gekennzeichnet, dass** zur Ermittlung des Zustands Notbremsung (103) zusätzlich das Steuersignal des Bremslichtschalters (102) herangezogen wird.

5. Verfahren nach einem der Ansprüche 1 bis 4, **dadurch gekennzeichnet, dass** die Zustände Untersteuern (110) und Übersteuern (111) mittels einer Bewertung der Differenz aus einem Winkel, welcher eine Veränderung der tatsächlichen Fahrtrichtung beschreibt, und dem Lenkwinkel (α_{L}) ermittelt werden.

6. Verfahren nach Anspruch 5, **dadurch gekennzeichnet, dass** der Winkel, welcher eine Veränderung der tatsächlichen Fahrtrichtung beschreibt aus den Raddrehzahlen (v_{R}), der Querbeschleunigung (a_{y}) und dem Radstand ermittelt wird.

7. Verfahren nach Anspruch 5, **dadurch gekennzeichnet, dass** der Winkel, welcher eine Veränderung der tatsächlichen Fahrtrichtung beschreibt aus den Raddrehzahlen (v_{R}), der Giergeschwindigkeit (v_{G}) und dem Radstand ermittelt wird.

8. Verfahren nach Anspruch 5, **dadurch gekennzeichnet, dass** der Winkel, welcher eine Veränderung der tatsächlichen Fahrtrichtung beschreibt der Ackermannwinkel ist.

9. Verfahren nach einem der Ansprüche 1 bis 5, **dadurch gekennzeichnet, dass** der Zustand Übersteuern (111) mittels einer Bewertung des Schwimmwinkels ermittelt wird.

10. Verfahren nach Anspruch 9 **dadurch gekennzeichnet, dass** der Schwimmwinkel aus den Raddrehzahlen (v_{R}), der Giergeschwindigkeit (v_{G}) und der Querbeschleunigung (a_{y}) ermittelt wird.

11. Verfahren nach einem der Ansprüche 5 bis 10, **dadurch gekennzeichnet, dass** die Bewertung eine Schwellwertabfrage ist.

12. Verfahren nach einem der Ansprüche 5 bis 10, **dadurch gekennzeichnet, dass** die Bewertung unter Einbeziehung zurückliegender Werte erfolgt.

13. Verfahren nach einem der Ansprüche 1 bis 12, **dadurch gekennzeichnet, dass** das Schutzsystem (113) eine elektrische Sitzverstellvorrichtung und/oder eine elektrische Verstellvorrichtung von Fahrzeugöffnungen und/oder ein reversibler Gurtstraffer und/oder eine elektrisch verstellbare Prallschutzvorrichtung ist.

## Claims

1. A process for triggering a reversible occupant protection means (113) in a motor vehicle having a sensory mechanism which collects vehicle status data and a reversible occupant protection means (113) which can be triggered and thus switched to active mode before the point of collision, the vehicle status data being monitored in respect of an emergency braking status (103) and when emergency braking (103) status is detected the occupant protection system (113) being triggered, and the vehicle status data also being monitored in respect of an over-steer status (111) and an under-steer status (110), and when emergency braking status (103) and/or over-steer status (111) and/or under-steer status (110) is detected the occupant protection system (113) being triggered,
**characterised in that**
the direction from which a maximum threat is expected is determined by means of the emergency braking (103), under-steer (110) and over-steer (111) statuses, and the occupant protection system (113) is triggered in such a manner that the protective effect is directed in the direction of maximum threat.

2. A process in accordance with claim 1,
**characterised in that**
the speed of the motor vehicle is determined and the reversible occupant protection device is triggered only if the vehicle is also moving at a minimum speed.

3. A process in accordance with one of claims 1 or 2,
**characterised in that**
the vehicle has an auxiliary braking system which effects an intervention in the braking system by means of a control signal in predetermined critical situations, and the control signal of the auxiliary braking system is used to determine emergency braking status (103).

4. A process in accordance with claim 3,
**characterised in that**
the control signal of the brake light switch (102) is also used to determine emergency braking (103) status.

5. A process in accordance with one of claims 1 to 4,
**characterised in that**
the understeer (110) and oversteer (111) statuses are determined by means of an evaluation of the difference between an angle which describes a change in the actual direction of travel, and the steering angle (α_{L}).

6. A process in accordance with claim 5,
**characterised in that**
the angle which describes a change in the actual direction of travel is determined from the wheel velocities (v_{R}), the transverse acceleration (a_{y}) and the wheelbase.

7. A process in accordance with claim 5,
**characterised in that**
the angle which describes a change in the actual direction of travel is determined from the wheel velocities (v_{R}), the yaw velocity (v_{G}) and the wheelbase.

8. A process in accordance with claim 5,
**characterised in that**
the angle which describes a change in the actual direction of travel is the relative steering (Ackermann) angle.

9. A process in accordance with one of claims 1 to 5,
**characterised in that**
the over-steer status (11) status is determined by means of an evaluation of the sideslip angle.

10. A process in accordance with claim 9,
**characterised in that**
the sideslip angle is determined from the wheel velocities (v_{R}), the yaw velocity (v_{G}) and the transverse acceleration (a_{y}).

11. A process in accordance with one of claims 5 to 10,
**characterised in that**
the evaluation is a threshold value inquiry.

12. A process in accordance with one of claims 5 to 10,
**characterised in that**
the evaluation is carried out including values in the past.

13. A process in accordance with one of claims 1 to 12,
**characterised in that**
the protection system (113) is an electrical seat adjustment device and/or an electrical adjusting device for vehicle openings and/or a reversible belt tensioner and/or an electrically adjustable impact protection device.

## Revendications

1. Procédé pour commander un moyen de protection réversible de passager (113) dans un véhicule automobile, comprenant un dispositif capteur, qui détecte des données d'état de roulement, et un moyen de protection réversible de passager (113), qui se déclenche avant l'instant de collision et peut ainsi être placé en position active, dans lequel les données d'état de roulement sont surveillées concernant un état de freinage de secours (103) et le système de protection de passager (113) est déclenché lors d'une détection de l'état de freinage de secours (103), les données d'état de roulement sont également surveillées concernant un état de survirage (111) et un état de sous-virage (110), et le système de protection de passager (113) est déclenché lors d'une détection de l'état de freinage de secours (103) et/ou de survirage (111) et/ou de sous-virage (110), **caractérisé en ce que** les états de freinage de secours (103), de sous-virage (110) et de survirage (111) permettent de déterminer la direction depuis laquelle un danger maximal est à prévoir, et le système de protection de passager (113) est commandé de manière à ce que l'effet de protection s'effectue selon la direction du danger maximal.

2. Procédé selon la revendication 1, **caractérisé en ce que** la vitesse du véhicule automobile est déterminée et le système de protection de passager n'est déclenché que si en plus le véhicule présente une vitesse minimale.

3. Procédé selon l'une quelconque des revendications 1 ou 2, **caractérisé en ce que** le véhicule présente un système d'assistance au freinage qui dans des situations critiques prédéfinies provoque au moyen d'un signal de commande une intervention dans le système de freinage, et pour la détermination de l'état de freinage de secours (103) le signal de commande du système d'assistance au freinage est utilisé.

4. Procédé selon la revendication 3, **caractérisé en ce que** pour déterminer l'état de freinage de secours (103), on utilise également le signal de commande du commutateur de feu stop (102).

5. Procédé selon l'une quelconque des revendications 1 à 4, **caractérisé en ce que** les états de sous-virage (110) et de survirage (11) sont déterminés au moyen d'une évaluation de la différence entre un angle décrivant un changement de la direction de roulement réelle et l'angle de braquage (α_{L}).

6. Procédé selon la revendication 5, **caractérisé en ce que** l'angle décrivant un changement de la direction de roulement réelle est déterminé à partir des vitesses de rotation des roues (V_{R}), de l'accélération transversale (a_{y}) et de l'empattement.

7. Procédé selon la revendication 5, **caractérisé en ce que** l'angle décrivant un changement de la direction de roulement réelle est déterminé à partir des vitesses de rotation des roues (V_{R}), de la vitesse de lacet (V_{G}) et de l'empattement.

8. Procédé selon la revendication 5, **caractérisé en ce que** l'angle décrivant un changement de la direction de roulement réelle est l'angle Ackermann.

9. Procédé selon l'une quelconque des revendications 1 à 5, **caractérisé en ce que** l'état de survirage (111) est déterminé au moyen d'une évaluation de l'angle de flottement.

10. Procédé selon la revendication 9, **caractérisé en ce que** l'angle de flottement est déterminé à partir des vitesses de rotation des roues (V_{R}), de la vitesse de lacet (V_{G}) et de l'accélération transversale (a_{y}).

11. Procédé selon l'une quelconque des revendications 5 à 10, **caractérisé en ce que** l'évaluation est une interrogation de valeur seuil.

12. Procédé selon l'une quelconque des revendications 5 à 10, **caractérisé en ce que** l'évaluation s'effectue en tenant compte de valeurs précédentes.

13. Procédé selon l'une quelconque des revendications 1 à 12, **caractérisé en ce que** le système de protection (113) est un dispositif électrique de réglage de siège et/ou un dispositif électrique de réglage d'ouvertures de véhicule et/ou un tendeur de ceinture réversible et/ou un dispositif anti-impact réglable électriquement.
